# EUROPÄISCHE PATENTSCHRIFT

(11) **EP 2 263 813 B1**
(45) Veröffentlichungstag und Bekanntmachung des Hinweises auf die Patenterteilung: **05.10.2011**
(21) Anmeldenummer: 10005931.0
(22) Anmeldetag: 09.06.2010
(51) Int. Cl.: B21D 53/34, F16D 65/12

(54) **Verfahren zur Herstellung einer Bremsscheibe und nach dem Verfahren hergestellte Bremsscheibe**
Method for manufacturing a brake disc and brake disc produced according to the method
Procédé de fabrication d'un disque de frein et disque de frein obtenu par ledit procédé

(30) Priorität: 18.06.2009 DE 102009029780
(43) Veröffentlichungstag der Anmeldung: 22.12.2010
(73) Patentinhaber: Schwäbische Hüttenwerke Automotive GmbH, 73433 Aalen (DE)
(72) Erfinder: Füllgrabe, Florian, 64372 Ober-Ramstadt (DE); Türk, Markus, 56459 Bellingen (DE); Tscherepanow, Waldemar, 64720 Michelstadt (DE); Hoffmann, Ingo, 78532 Tuttlingen (DE)
(74) Vertreter: Riedel, Peter

(56) Entgegenhaltungen:
- EP-A2- 1 426 644
- EP-B1- 0 830 520
- EP-B1- 1 476 670
- DE-A1- 4 420 758
- DE-A1- 10 032 972

## Beschreibung

Die Erfindung betrifft ein Verfahren zur Herstellung einer Bremsscheibe für Scheibenbremsen der im Oberbegriff des Anspruchs 1 angegebenen Gattung sowie eine nach dem Verfahren hergestellte Bremsscheibe, nach dem Oberbegriff des Anspruchs 10.

Im PKW-Fahrzeugbau werden bereits seit einigen Jahren zur Gewichtsreduzierung und Komfortverbesserung Bremsscheiben für Scheibenbremsen entwickelt, bei denen Reibring und Topf aus unterschiedlichen Materialen bestehen. Dies hat den Vorteil, dass der Reibring, auf dem die Reibbeläge der Scheibenbremse zur Anlage kommen, und der auf einer Achse oder einem Radträger befestigte Topf aus den für die entsprechenden Anforderungen geeigneten Materialen bestehen können.

Aus der DE 44 20 758 C2 ist eine Bremsscheibe bekannt, die aus einem Reibring und einem Topf besteht, wobei Reibring und Topf formschlüssig miteinander verbunden sind. Der Reibring ist an seinem inneren Randbereich mit radial nach innen offenen Ausnehmungen versehen, die den inneren Randbereich in radial nach innen ragende Zähne unterteilen, und der Topf ist an seinem äußeren Randbereich mit Sicherungszungen und Anschlagzungen versehen. Radial nach außen umgebördelte Enden der Sicherungszungen greifen bezüglich der Umfangsrichtung formschlüssig in die Ausnehmungen des Reibrings. In axialer Richtung ist der Reibring mit dem Topf durch umgebogene Enden der Anschlagzungen und radial hervorstehende Durchprägungen des Topfes formschlüssig verbunden.

Aus der DE 100 32 972 A1 ist eine Verbund-Bremsscheibe für eine Fahrzeug-Scheibenbremse mit einem Reibring aus einem Gusswerkstoff und Bremsscheibentopf aus Stahl oder einem vergleichbaren hochfesten Material bekannt. Der Bremsscheibentopf ist an seinem kreiszylindrischen Mantel mit Durchbrüchen oder mit Abschnitten reduzierter Wandstärke versehen, um eine ausreichende Elastizität für eine thermische Dehnung des Reibrings zu gewährleisten. Ein zylindrischer Fortsatz des Reibrings und ein Mantel des Bremsscheibentopfes bilden die Fügestelle, die als Press- oder Schrumpfsitz ausgebildet ist, wobei ein Abschnitt des Topfes den zylindrischen Fortsatz umgibt. Es werden dadurch sich überlagernde Abschnitte gebildet, die zusätzlich durch Nieten verbunden sind.

Aus der DE 10 2006 043 945 A1 ist eine Bremsscheibe für eine Kfz-Scheibenbremse bekannt mit einem Reibring und einem Bremsscheibentopf, welcher mittels mehrerer über den Umfang des Bremsscheibentopfes angeordneter, in radialer Richtung verlaufender Verbindungselemente mit dem Reibring verbunden ist. Nach dem Gießen des Reibringes werden an dessen innerem Umfang mehrere Bohrungen angebracht, in die anschließend Stifte als Verbindungselemente eingesetzt werden. Nach dem Anbringen der Verbindungselemente im Reibring werden diese bei der Herstellung des Bremsscheibentopfes mit dem Material des Topfes umgossen.

Der vorliegenden Erfindung liegt die Aufgabe zugrunde, ein Verfahren zur Herstellung einer Bremsschreibe der eingangs genannten Gattung zu schaffen, durch das der Fertigungsaufwand reduziert wird. Außerdem besteht die Aufgabe darin, eine solche Bremsscheibe anzugeben.

Diese Aufgabe wird durch ein Verfahren zur Herstellung einer Bremsscheibe mit den Merkmalen des Anspruchs 1 und durch eine Bremsscheibe mit den Merkmalen des Anspruchs 10 gelöst.

Bei der vorliegenden Erfindung ist die Herstellung des Bremsscheibentopfes eine Kombination aus den Verfahrensstufen Drücken und Drückwalzen. Während die Verfahrensstufe des Drückens eine Umformung des Bleches bewirkt, wird mit der Verfahrensstufe des Drückwalzens eine gewollte Änderung der Blechdicke erzeugt. Für die Erzeugung des Topfes wird durch Drücken die Topfgeometrie geschaffen und die Oberflächenschicht mittels Drückwalzen verfestigt. Vorteilhaft ist dabei, dass für beide Teilprozesse dieselben Werkzeuge zum Einsatz kommen und die Teilprozesse somit fließend ineinander übergehen können. Gegenüber den bekannten Verfahren besteht ein wesentlicher Vorteil der Erfindung darin, dass die Herstellung des Topfes unabhängig von den Gesenk- und Werkzeugformen ist. Allerdings ist die Walzengeometrie variabel, so dass den jeweiligen Topfformen und -größen entsprochen werden kann. Auch kann dies Einfluss auf die Oberflächengüte des Topfes haben. Dadurch wird die Erzeugung von Varianten erleichtert und daher eine Reduzierung der Kosten für die Werkzeugherstellung erreicht. Auf diese Weise können Bremsscheiben unterschiedlicher Dimension und Belüftungsgestaltung mit minimalem Änderungsaufwand an den Umformmaschinen hergestellt werden.

Ein weiterer Vorteil ergibt sich dadurch, dass die Kombination aus Drücken und Drückwalzen eine zusätzliche Kaltverfestigung des Topfes bewirkt, wodurch die Festigkeit von Topf und Anbindung erhöht werden kann. Weiterhin zeichnet sich das gesamte Verfahren neben den guten Oberflächeneigenschaften des Topfes auch durch die Verbesserung der mechanischen Eigenschaften aus, insbesondere die dynamische Beanspruchbarkeit steigt durch die Einbringung bleibender Druckspannungen in die Randschicht. Durch die Glättung der Oberfläche werden Bearbeitungsriefen, durch welche Kerbwirkungseffekte entstehen, beseitigt. Die Oberflächenqualität kann durch die Wahl eines kleineren Vorschubes oder Einsatz einer Drückwalze mit größerem Krümmungsradius verbessert werden. Aufgrund der vergleichsweise niedrigen Umformkräfte im Vergleich zum Tiefziehen sind hohe Werkzeugstandzeiten und niedrige Werkzeugkosten gegeben.

Gemäß einer vorteilhaften Weiterbildung der Erfindung erfolgt eine kombiniert-schlüssige Verbindung aus Formschluss und Reibkraftschluss, wobei der Reibkraftschluss durch die Anpresskraft während des Drückwalzens erzeugt wird. Dabei wird der Formschluss über Formelemente und der Reibkraftschluss während des Verbindungsprozesses hergestellt. Die reibkraftschlüssige Komponente kann sowohl zur Übertragung von Kräften in Umfangsrichtung, als auch zur Übertragung von axialen Kräften ausgelegt werden. Gemäß einer Ausführungsvariante wird der Formschluss dadurch erzeugt, dass Material des Topfes beim Drückwalzen in Vertiefungen am Fortsatz hineingedrückt wird. Hierdurch kann der Formschluss in Umfangsrichtung und Axialrichtung erzeugt werden. Gemäß einer weiteren Alternative wird ein Formschluss auf Mikroebene durch Hartpartikel wie Diamant oder durch Materialrauheit in Folge Mikro-Oberflächenbearbeitung der Fügefläche des Fortsatzes erzeugt. Dieser Mikroformschluss kann einen zur Übertragung der erforderlichen Kräfte ausreichenden Formschluss darstellen, oder als ergänzender Formschluss vorgesehen sein. Durch den Mikroformschluss erfolgt auch eine Sicherung in axialer Richtung. Darüber hinaus ist es vorteilhaft, dass das Drücken und Drückwalzen mit denselben Walzen durchgeführt wird. Als besonders zweckmäßig wird angesehen, dass das Drücken und Drückwalzen mit drei Walzen durchgeführt wird, die über einen Umfang um 120° versetzt angeordnet sind. Der Herstellungsabschnitt des Drückens kann als Kaltumformung ausgeführt werden, es ist jedoch auch möglich, diesen Herstellungsabschnitt als Warmumformung auszuführen. Bei der Warmumformung wird das Bauteil durch eine vorzugsweise radial angeordnete Wärmequelle erwärmt.

Gemäß einer Weiterbildung der Bremsscheibe sind an dem Fortsatz im Bereich der Fügefläche Formelemente vorgesehen. Diese Formelemente können beispielsweise als Rippen, Pyramidenstümpfe, Kegelabschnitte, Zapfen oder dgl. ausgebildet sein. Es ist außerdem zweckmäßig, am Fortsatz eine in Umfangsrichtung verlaufende Nut vorzusehen.

Der Topf besteht bevorzugt aus einer Aluminium-Knetlegierung, und der Reibring bzw. die Reibringanordnung ist zweckmäßigerweise aus einem Grauguss, einer Aluminiumlegierung oder einem keramischen Material gebildet. Die Reibringanordnung ist vorzugsweise mit dem Fortsatz und den Formelementen einstückig als Gussteil ausgebildet.

Ausführungsbeispiele der Erfindung sind nachstehend anhand der Zeichnung näher erläutert. In der Zeichnung zeigt:
- Fig. 1: in schematischer Darstellung einen Aufbau zum Formen eines Topfes und dessen Befestigung an einem Reib- ring,
- Fig. 2: eine Darstellung gemäß Fig. 1 mit teilweise umge- formtem Material des Topfes,
- Fig. 3: den vollständig geformten Topf und dessen Be- festigung auf einem nabenartigen Fortsatz des Reib- ringes,
- Fig. 4: eine perspektivische Ansicht einer Reibringan- ordnung,
- Fig. 5: eine Ansicht der Reibringanordnung in axialer Richtung,
- Fig. 6: eine vergrößerte Darstellung der Einzelheit VI in Fig. 5,
- Fig. 7: einen axialen Schnitt durch eine erfindungsgemäß hergestellte Bremsscheibe,
- Fig. 8: eine Ansicht der fertigen Bremsscheibe in axialer Richtung,
- Fig. 9: eine perspektivische Ansicht der Bremsscheibe gemäß Fig. 8,
- Fig. 10: eine Ausführungsvariante der Reibringanordnung zu Fig. 4,
- Fig. 11: einen axialen Schnitt durch eine Bremsscheibe mit Reibringanordnung gemäß Fig. 10.

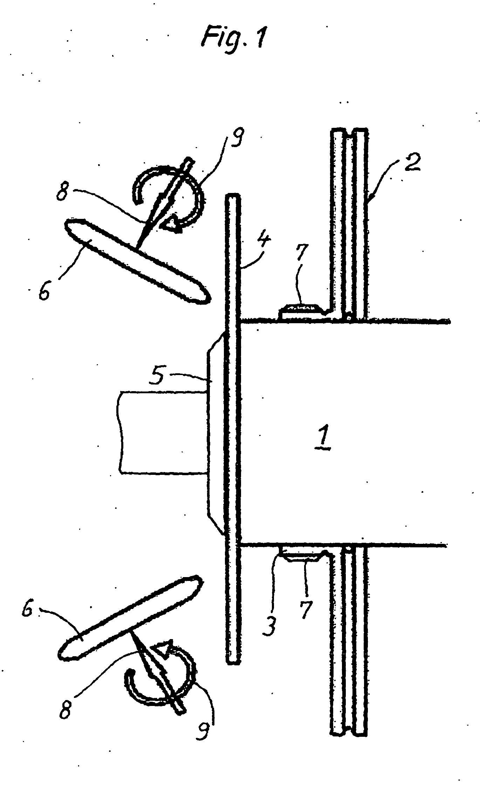

In Fig. 1 ist in schematischer Darstellung ein Aufbau zum Formen eines Topfes für eine Scheibenbremse und zum Verbinden mit einem Reibring 2 zu einer Bremsscheibe gezeigt. Der Reibring 2 ist mit einem nabenartigen Fortsatz 3 versehen und auf einem Drückfutter 1 gehalten. Am radial äußeren Umfang des Fortsatzes 3 sind mehrere Formelemente 7 vorgesehen, zwischen denen Vertiefungen gebildet sind. An der Stirnseite des Drückfutters 1 befindet sich ein rundes Blech, eine sogenannte Ronde 4, aus einem für die Umformung geeignetem Material vorzugsweise einer Aluminiumlegierung, wobei die Ronde 4 mittels eines Gegenhalters 5 fest gegen das Drückfutter 1 gepresst wird. In Fig. 1 sind zwei Drückwalzen 6 gezeigt, selbstverständlich kann auch eine andere Anzahl von Drückwalzen vorgesehen werden, wobei drei über den Umfang um 120° versetzte Drückwalzen 6 als besonders geeignet angesehen werden. Die Drückwalzen 6 sind auf Achsen 8 gelagert und werden gemäß Pfeil 9 in Rotation versetzt.

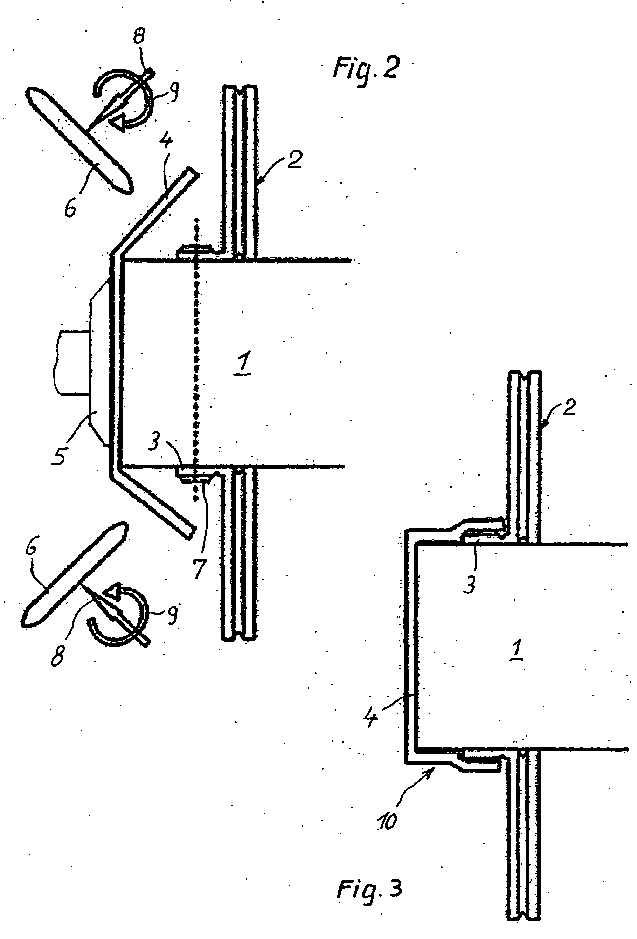

Durch das Einwirken der Drückwalzen 6 auf die Ronde 4 in mehreren Stufen wird der radial über das Drückfutter hinausstehende Bereich des Blechs umgeformt, und zwar derart, dass dieser Bereich zum Reibring 2 hin gerichtet wird, wie dies in einer in Fig. 2 dargestellten Verformungsstufe gezeigt ist. Die Bezugszeichen in Fig. 2 stimmen für gleiche Teile mit denjenigen der Fig. 1 überein. Das ursprünglich als Ronde 4 in Fig. 1 ausgeführte Werkstück wird durch Drücken in mehreren Umformstufen bearbeitet, bis das Material an der Kontur des Drückfutters 1 anliegt. Damit ist ein Topf 10 in Fig. 3 durch Umformung erzeugt, wobei ein zylindrischer Abschnitt des Topfes den Fortsatz 3 umgibt.

Dann erfolgt das Verbinden des Topfes 10 in Fig. 3 durch Drückwalzen. Dabei bilden der Umfang des Fortsatzes 3 mit den Formelementen 7 und der zylindrische Abschnitt des Topfes 10 Fügeflächen, an denen Bauteile verbunden werden. Um einen ungünstigen Materialfluss zu vermeiden, ist es vorteilhaft, die Drückwalzen 6 in Fig. 2 radial und axial versetzt zueinander anzuordnen. Beim Drückwalzen wird ein Teil des Materials des Topfes 10 gegen den Fortsatz 3 am Reibring 2 gepresst und auch hinter die Formelemente 7 und in die Vertiefungen zwischen diesen gedrückt, wodurch eine reib- und formschlüssige Verbindung von Topf 10 und Reibring 2 geschaffen wird. Durch die Kombination aus Drücken und Drückwalzen wird eine Kaltverfestigung des Topfes 10 bewirkt, wodurch eine Steigerung der Festigkeit von Topf und Anbindung erreicht wird. Durch das Drückwalzen wird die Blechdicke reduziert und außerdem die Oberfläche geglättet.

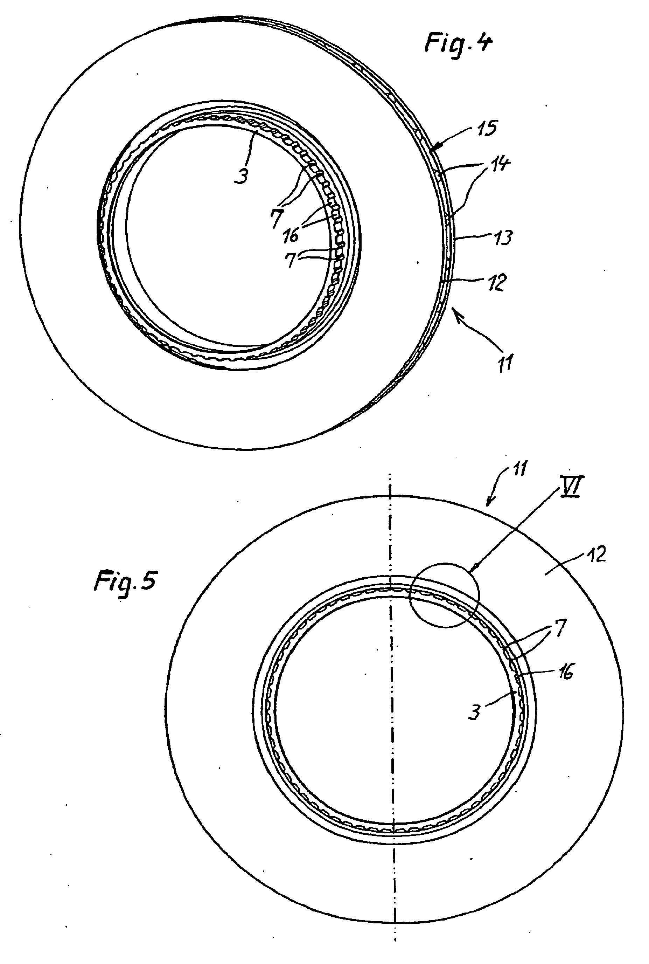

In Fig. 4 ist eine perspektivische Ansicht einer Reibringanordnung 11 gezeigt, die zwei Reibringe 12 und 13 umfasst, die über dazwischen angeordnete Stege 14 miteinander verbunden sind und Kühlluftkanäle 15 bilden. An dem inneren Umfang des Reibrings 12 ist der Fortsatz 3 angeformt, der sich in axialer Richtung erstreckt und nabenartig ausgebildet ist. An seinem äußeren Umfang ist der Fortsatz 3 mit einer Vielzahl von rippenförmigen Formelementen 7 versehen, die ein Zahnprofil mit dazwischen befindlichen Vertiefungen 16 bilden. Die Reibringanordnung 11 ist als Gussteil einstückig ausgebildet und besteht beispielsweise aus Grauguss, einer Aluminiumlegierung oder keramischem Werkstoff.

Die Fig. 5 zeigt eine Ansicht der Reibringanordnung 11 gemäß Fig. 4 in axialer Richtung. Daraus ist ersichtlich, dass sich vor dem Reibring 12 der Fortsatz 3 befindet, über dessen gesamten Umfang gleichmäßig verteilt die Formelemente 7 mit dazwischen liegenden Vertiefungen 16 angeordnet sind.

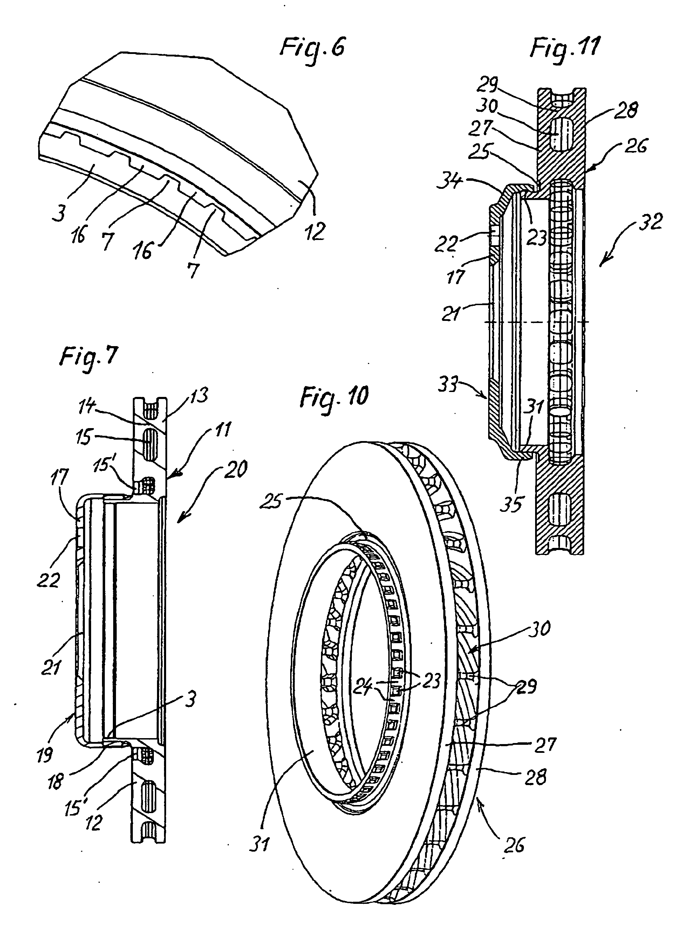

Die Fig. 6 zeigt eine vergrößerte Darstellung der Einzelheit VI in Fig. 5. Es ist erkennbar, dass die Formelemente 7 am Fortsatz 3 einen trapezförmigen Querschnitt aufweisen und die Vertiefungen 16 zwischen den Formelementen 7 eine größere Breite aufweisen als die Formelemente.

In Fig. 7 ist ein axialer Schnitt durch eine Bremsscheibe 20 dargestellt, die aus der Reibringanordnung 11 gemäß Fig. 4 und 5 sowie einem Topf 19 gebildet ist. Die Herstellung des Topfes 19 und Anbindung an die Reibringanordnung 11 durch Drückwalzen des Topfes 19 auf den Fortsatz 3 erfolgt so, wie dies zu Fig. 1 bis 3 beschrieben wurde. Der Topf 19 weist einen radialen Abschnitt 17 mit zentrischer Öffnung 21 und Bohrungen 22 sowie einen durch Drücken geformten axialen, zylindrischen Abschnitt 18 auf, wobei dieser durch Drückwalzen mit dem Fortsatz der Reibringanordnung 11 reib- und formschlüssig verbunden ist. Die Kühlluftkanäle 15 sind an ihren radial inneren Enden über eine ringförmige Ausnehmung 15' zur Stirnseite des Reibringes 12 hin offen. Die Bezugszeichen für gleiche Teile stimmen mit denjenigen der Fig. 4 überein.

Es ist auch möglich, auf dem Fortsatz 3 in Fig. 4 ein Band aus einem Elastomer anzubringen, so dass über den Umfang des Fortsatzes mit seinen Formelementen 7 eine dünne Schicht eines dämpfenden Materials gelegt ist. Durch das Drücken und Drückwalzen des Blechs beim Formen und Verbinden des Topfes 19 (vgl. Fig. 7) befindet sich nach der Umformung und Verbindung das Band zwischen dem Fortsatz 3 und dem zylindrischen Abschnitt 18. Durch die dämpfenden Eigenschaften des Bandes wird eine Geräuschreduzierung erreicht. Außerdem wird durch das Band Kontaktkorrosion im Verbindungsbereich von Topf und Bremsringanordnung vermieden.

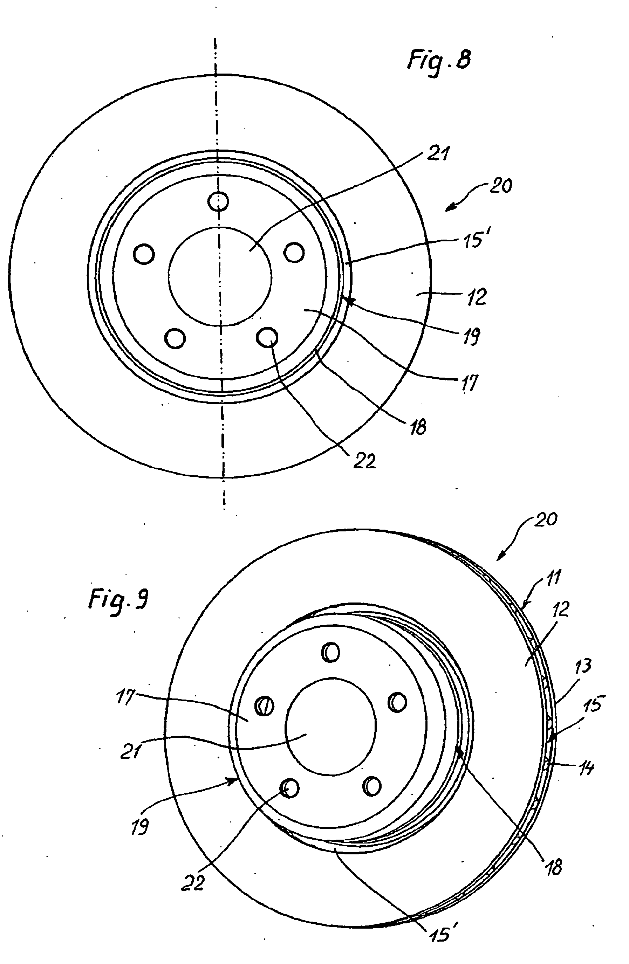

Die Fig. 8 zeigt eine axiale Ansicht der vollständigen Bremsscheibe 20, und in Fig. 9 ist eine perspektivische Darstellung der Bremsscheibe 20 gezeigt. Im Übrigen stimmen die Bezugszeichen für gleiche Teile mit denjenigen der Fig. 4 bis 7 überein.

In Fig. 10 ist eine Ausführungsvariante einer Reibringanordnung 26 in perspektivischer Ansicht dargestellt, die zwei Reibringe 27, 28 mit dazwischen befindlichen Stegen 29 und Kühlluftkanälen 30 umfasst. Die Kühlluftkanäle 30 sind zum inneren Umfang der Reibringanordnung 26 hin offen. Als Formelemente 23 sind am Umfang eines Fortsatzes 31 trapezförmige bzw. pyramidenstumpfförmige Erhebungen vorgesehen. Zwischen den Formelementen 23 sind Vertiefungen 24 gebildet, und im Übergangsbereich vom Fortsatz 31 zum Reibring 12 ist eine umlaufende Nut 25 vorgesehen.

Die Fig. 11 zeigt einen axialen Schnitt durch eine aus einem Topf 33 und Reibringanordnung 26 gebildete Bremsscheibe 32. Dabei ist der Topf 33 zu dessen Formgebung auf einem Drückfutter mit stirnseitig, kegelstumpfförmiger Ausbildung gefertigt worden, so dass sich durch Drücken in mehreren Verformungsstufen ein konischer Abschnitt 34 und axialer, zylindrischer Abschnitt 35 ergibt. Das vordere Ende des zylindrischen Abschnitts 35 wird auf dem Fortsatz 31 durch Drückwalzen verformt, wodurch Material hinter die Formelemente 23 und in die Vertiefungen 24 fließt und ggf. auch teilweise in die Nut 25.

Alternativ zu der in der Zeichnung dargestellten Form können die Formelemente auch kugelabschnittförmig gestaltet oder als Zapfen ausgeführt sein. Die Anzahl und Geometrie der Formelemente wird durch das zu übertragende Bremsmoment bestimmt. Zur axialen Sicherung des Topfes an der Reibringanordnung kann ein entsprechender Reibkraftschluss ausreichen, in den Ausführungsbeispielen ist jedoch eine axiale Sicherung durch Formschluss gegeben, wobei anstelle der dargestellten Formelemente auch umlaufende Rillen vorgesehen sein können.

## Patentansprüche

1. Verfahren zur Herstellung einer Bremsscheibe (20, 32), die aus einem Reibring (2) oder einer Reibringanordnung (11, 26) und einem damit verbundenen Topf (10, 19, 33) besteht, wobei am Reibring (2) bzw. der Reibringanordnung (11, 26) ein nabenartiger Fortsatz (3, 31) mit einer Umfangsfläche gebildet und ein den Fortsatz (3, 31) umgreifender zylindrischer Abschnitt (18, 35) des Topfes (10, 19, 33) mit dem Fortsatz (3, 31) verbunden wird, **dadurch gekennzeichnet, dass** der Reibring (2) bzw. die Reibringanordnung (11, 26) auf einem Drückfutter (1) angeordnet wird und der Topf (10, 19, 33) mittels mindestens einer Walze (6) durch Drücken aus einem Blech (4) geformt wird, wobei das Blech (4) zwischen dem Drückfutter (1) und einem Gegenhalter (5) eingespannt ist und die Walze (6) auf einen über das Drückfutter (1) hinausstehenden Bereich des Bleches (4) derart einwirkt, dass das Blech (4) in Richtung auf den Reibring (2) bzw. die Reibringanordnung (11, 26) gedrückt wird und sich an den Umfang des Drückfutters (1) und des Fortsatzes (3, 31) anlegt, so dass im überlappenden Bereich Fügeflächen gebildet werden und danach Walzen (6) auf den den Fortsatz (3, 31) umgebenden zylindrischen Abschnitt derart einwirken, dass durch Drückwalzen eine formschlüssige Verbindung des Topfes (10, 19, 33) mit dem Reibring (2) bzw. der Reibringanordnung (11, 26) erzeugt wird.

2. Verfahren nach Anspruch 1,
**dadurch gekennzeichnet, dass** eine kombiniert-schlüssige Verbindung aus Formschluss und Reibkraftschluss erfolgt, wobei der Reibkraftschluss durch die Anpresskraft während des Drückwalzens erzeugt wird.

3. Verfahren nach Anspruch 1 oder 2,
**dadurch gekennzeichnet, dass** der Formschluss **dadurch** erzeugt wird, dass das Material des Topfes (10, 19, 33) beim Drückwalzen in Vertiefungen (16) am Fortsatz hineingedrückt wird.

4. Verfahren nach Anspruch 3,
**dadurch gekennzeichnet, dass** der Formschluss in Umfangsrichtung und Axialrichtung erfolgt.

5. Verfahren nach einem der Ansprüche 1 bis 4,
**dadurch gekennzeichnet, dass** ein Formschluss auf Mikroebene durch Hartpartikel, wie Diamant, oder durch Materialrauheit in Folge Mikro-Oberflächenbearbeitung der Fügefläche des Fortsatzes (3, 31) erzeugt wird.

6. Verfahren nach einem der Ansprüche 1 bis 5,
**dadurch gekennzeichnet, dass** das Drücken und Drückwalzen mit denselben Walzen (6) durchgeführt wird.

7. Verfahren nach einem der Ansprüche 1 bis 6,
**dadurch gekennzeichnet, dass** das Drücken und Drückwalzen mit drei Walzen (6) durchgeführt wird, die über einen Umfang um 120° versetzt angeordnet sind.

8. Verfahren nach einem der Ansprüche 1 bis 7,
**dadurch gekennzeichnet, dass** der Herstellungsabschnitt des Drückens als Kaltumformung ausgeführt wird.

9. Verfahren nach einem der Ansprüche 1 bis 7,
**dadurch gekennzeichnet, dass** der Herstellungsabschnitt des Drückens als Warmumformung ausgeführt wird.

10. Bremsscheibe (20, 32) für Scheibenbremsen bestehend aus einem Reibring (2) oder einer Reibringanordnung (11, 26) und einem Topf (10, 19, 33), wobei an dem Reibring bzw. der Reibringanordnung (11, 26) ein nabenartiger Fortsatz (3, 31) vorgesehen ist und dieser von einem zylindrischen Abschnitt (18, 35) des Topfes (10, 19, 33) umgeben ist, wobei der Fortsatz (3, 31) und der zylindrische Abschnitt (18, 35) Fügeflächen aufweisen, an denen der Topf (10, 19, 33) mit dem Reibring (2) bzw. der Reibringanordnung (11, 26) verbunden sind,
**dadurch gekennzeichnet, dass** der Topf (10, 19, 33) aus einem durch Drücken umgeformten Blech (4) besteht und im Bereich der Fügeflächen Material des Topfes (10, 19, 33) durch Drückwalzen formschlüssig am Fortsatz (3, 31) befestigt ist.

11. Bremsscheibe nach Anspruch 10,
**dadurch gekennzeichnet, dass** an dem Fortsatz (3, 31) im Bereich der Fügefläche Formelemente (7, 23) vorgesehen sind.

12. Bremsscheibe nach Anspruch 11,
**dadurch gekennzeichnet, dass** die Formelemente (7, 23) als Rippen, Pyramidenstümpfe, Kegelabschnitte, Zapfen oder dgl. ausgebildet sind.

13. Bremsscheibe nach einem der Ansprüche 10 bis 12,
**dadurch gekennzeichnet, dass** an dem Fortsatz (7, 23) eine ununterbrochene oder mehrere unterbrochene in Umfangsrichtung verlaufende Nuten (25) vorgesehen ist.

14. Bremsscheibe nach einem der Ansprüche 11 bis 13,
**dadurch gekennzeichnet, dass** die Reibringanordnung (11, 26) mit dem Fortsatz (3, 31) und Formelementen (7, 23) einstückig als Gussteil ausgeführt ist.

15. Bremsscheibe nach einem der Ansprüche 10 bis 14,
**dadurch gekennzeichnet, dass** zwischen den Fügeflächen des Topfes (10, 19, 33) und dem Reibring (2) bzw. der Reibringanordnung (11, 26) ein Band aus einem Elastomer angeordnet ist.

## Claims

1. A method for the production of a brake disc (20, 32) which consists of a friction ring (2) or a friction-ring arrangement (11, 26) and a chamber (10, 19, 33) which is connected thereto, with a hub-like prolongation (3, 31) with a peripheral surface being formed on the friction ring (2) or the friction-ring arrangement (11, 26) and a cylindrical section (18, 35) of the chamber (10, 19, 33) which encompasses the prolongation (3, 31) being connected to the prolongation (3, 31), **characterised in that** the friction ring (2) or the friction-ring arrangement (11, 26) is arranged on a mandrel (1) and the chamber (10, 19, 33) is formed by means of at least one roller (6) by pressing from a metal sheet (4), the metal sheet (4) being clamped between the mandrel (1) and a counter-support (5), and the roller (6) acting on a region of the metal sheet (4) which extends beyond the mandrel (1) such that the metal sheet (4) is pressed in the direction of the friction ring (2) or the friction-ring arrangement (11, 26) and lies against the periphery of the mandrel (1) and the prolongation (3, 31) such that jointing surfaces are formed in the overlapping region and thereafter rollers (6) act on the cylindrical section surrounding the prolongation (3, 31) such that a form-locking connection of the chamber (10, 19, 33) to the friction ring (2) or the friction-ring arrangement (11, 26) is produced by pressure-rolling.

2. A method according to Claim 1, **characterised in that** a combined connection consisting of a form lock and a friction lock takes place, the friction lock being produced by the contact force during the pressure-rolling.

3. A method according to Claim 1 or 2, **characterised in that** the form lock is produced by the material of the chamber (10, 19, 33) upon pressure-rolling being pressed into recesses (16) on the prolongation.

4. A method according to Claim 3, **characterised in that** the form lock occurs in the peripheral direction and axial direction.

5. A method according to one of Claims 1 to 4, **characterised in that** a form lock on a microscopic level is produced by hard particles, such as diamond, or by material roughness as a result of micro-surface treatment of the jointing surface of the prolongation (3, 31).

6. A method according to one of Claims 1 to 5, **characterised in that** the pressing and pressure-rolling is carried out with the same rollers (6).

7. A method according to one of Claims 1 to 6, **characterised in that** the pressing and pressure-rolling is carried out with three rollers (6) which are arranged offset by 120° over a periphery.

8. A method according to one of Claims 1 to 7, **characterised in that** the production stage of pressing is carried out as cold working.

9. A method according to one of Claims 1 to 7, **characterised in that** the production stage of pressing is carried out as hot working.

10. A brake disc (20, 32) for disc brakes consisting of a friction ring (2) or a friction-ring arrangement (11, 26) and a chamber (10, 19, 33), with a hub-like prolongation (3, 31) being provided on the friction ring or the friction-ring arrangement (11, 26) and said prolongation being surrounded by a cylindrical section (18, 35) of the chamber (10, 19, 33), the prolongation (3, 31) and the cylindrical section (18, 35) having jointing surfaces to which the chamber (10, 19, 33) with the friction ring (2) or the friction-ring arrangement (11, 26) are connected, **characterised in that** the chamber (10, 19, 33) consists of a metal sheet (4) which has been shaped by pressing and in the region of the jointing surfaces material of the chamber (10, 19, 33) is fastened in form-locking manner to the prolongation (3, 31) by pressure-rolling.

11. A brake disc according to Claim 10, **characterised in that** formed elements (7, 23) are provided on the prolongation (3, 31) in the region of the jointing surface.

12. A brake disc according to Claim 11, **characterised in that** the formed elements (7, 23) are formed as ribs, truncated pyramids, conical sections, pins or the like.

13. A brake disc according to one of Claims 10 to 12, **characterised in that** one uninterrupted groove or a plurality of interrupted grooves (25) extending in the peripheral direction is/are provided on the prolongation (7, 23).

14. A brake disc according to one of Claims 11 to 13, **characterised in that** the friction-ring arrangement (11, 26) with the prolongation (3, 31) and formed elements (7, 23) is formed in one piece as a cast part.

15. A brake disc according to one of Claims 10 to 14, **characterised in that** a band made from an elastomer is arranged between the jointing surfaces of the chamber (10, 19, 33) and the friction ring (2) or the friction-ring arrangement (11, 26).

## Revendications

1. Procédé pour la fabrication d'un disque de frein (20, 32) qui se compose d'un anneau de friction (2) ou d'un dispositif formant anneau de friction (11, 26) et d'un godet (10, 19, 33) relié à celui-ci, étant précisé qu'on forme sur l'anneau de friction (2) ou sur le dispositif formant anneau de friction (11, 26) un prolongement en forme de moyeu (3, 31) avec une surface périphérique, et qu'on relie au prolongement (3, 31) une partie cylindrique (18, 35) du godet (10, 19, 33) qui entoure ledit prolongement (3, 31),
**caractérisé en ce qu'**on dispose l'anneau de friction (2) ou le dispositif formant anneau de friction (11, 26) sur un mandrin de repoussage (1) et on façonne le godet (10, 19, 33) par repoussage à partir d'une tôle (4) à l'aide d'au moins un galet (6), étant précisé que la tôle (4) est serrée entre le mandrin de repoussage (1) et un support opposé (5) et que le galet (6) agit sur une zone de la tôle (4) qui dépasse du mandrin (1) de telle sorte que la tôle (4) soit poussée en direction de l'anneau de friction (2) ou du dispositif formant anneau de friction (1&, 26) et s'applique contre la périphérie du mandrin de repoussage (1) et du prolongement (3, 31), de sorte que des surfaces d'assemblage se forment dans la zone de recouvrement, puis des galets (6) agissent sur la partie cylindrique qui entoure le prolongement (3, 31), de telle sorte qu'un accouplement par complémentarité de forme soit réalisé par fluotournage entre le godet (10, 19, 33) et l'anneau de friction (2) ou le dispositif formant anneau de friction (11, 26).

2. Procédé selon la revendication 1, **caractérisé en ce qu'**un accouplement combiné par complémentarité de forme et par friction est réalisé, étant précisé que l'accouplement par friction est produit par la force de pression pendant le fluotournage.

3. Procédé selon la revendication 1 ou 2, **caractérisé en ce que** l'accouplement par complémentarité de forme est réalisé grâce au fait que la matière du godet (10, 19, 33) est enfoncée, lors du fluotournage, dans des creux (16) prévus sur le prolongement.

4. Procédé selon la revendication 3, **caractérisé en ce que** l'accouplement par complémentarité de forme est réalisé dans le sens circonférentiel et dans le sens axial.

5. Procédé selon l'une des revendications 1 à 4, **caractérisé en ce qu'**un accouplement par complémentarité de forme est réalisé sur le plan micro grâce à des particules dures, comme du diamant, ou grâce à une rugosité de la matière à la suite d'un micro-traitement de surface de la surface d'assemblage du prolongement (3, 31).

6. Procédé selon l'une des revendications 1 à 5, **caractérisé en ce que** le repoussage et le fluotournage sont réalisés avec les mêmes galets (6).

7. Procédé selon l'une des revendications 1 à 6, **caractérisé en ce que** le repoussage et le fluotournage sont réalisés avec trois galets (6) qui sont décalés de 120° sur une circonférence.

8. Procédé selon l'une des revendications 1 à 7, **caractérisé en ce que** l'étape de fabrication qui consiste en un repoussage est conçu comme une déformation à froid.

9. Procédé selon l'une des revendications 1 à 7, **caractérisé en ce que** l'étape de fabrication qui consiste en un repoussage est conçu comme une déformation à chaud.

10. Disque de frein (20, 32) pour des freins à disque, composé d'un anneau de friction (2) ou d'un dispositif formant anneau de friction (11, 26) et d'un godet (10, 19, 33), étant précisé qu'il est prévu sur l'anneau de friction ou sur le dispositif formant anneau de friction (11, 26) un prolongement en forme de moyeu (3, 31) et que celui-ci est entouré par une partie cylindrique (18, 35) du godet (10, 19, 33), et étant précisé que le prolongement (3, 31) et la partie cylindrique (18, 35) présentent des surfaces d'assemblage au niveau desquelles le godet (10, 19, 33) est relié à l'anneau de friction (2) ou au dispositif formant anneau de friction (11, 26),
**caractérisé en ce que** le godet (10, 19, 33) se compose d'une tôle (4) déformée par repoussage, et dans la zone des surfaces d'assemblage, de la matière du godet (10, 19, 33) est fixée par complémentarité de forme au prolongement (3, 31) par fluotournage.

11. Disque de frein selon la revendication 10, **caractérisé en ce qu'**il est prévu sur le prolongement (3, 31), dans la zone de la surface d'assemblage, des éléments profilés (7, 23).

12. Disque de frein selon la revendication 11, **caractérisé en ce que** les éléments profilés (7, 23) sont conçus comme des nervures, des pyramides tronquées, des parties coniques, des saillies ou des éléments similaires.

13. Disque de frein selon l'une des revendications 10 à 12, **caractérisé en ce qu'**il est prévu sur le prolongement (7, 23) une rainure ininterrompue ou plusieurs rainures discontinues (25) qui s'étendent dans le sens circonférentiel.

14. Disque de frein selon l'une des revendications 11 à 13, **caractérisé en ce que** le dispositif formant anneau de friction (11, 26) est conçu, d'une seule pièce avec le prolongement (3, 31) et les éléments profilés (7, 23), comme une pièce coulée.

15. Disque de frein selon l'une des revendications 10 à 14, **caractérisé en ce qu'**il est prévu entre les surfaces d'assemblage du godet (10, 19, 33) et l'anneau de friction (2) ou le dispositif formant anneau de friction (11, 26), une bande en élastomère.
